# EUROPÄISCHE PATENTSCHRIFT

(11) **EP 1 907 324 B1**
(45) Veröffentlichungstag und Bekanntmachung des Hinweises auf die Patenterteilung: **11.10.2017**
(21) Anmeldenummer: 06776217.9
(22) Anmeldetag: 13.07.2006
(51) Int. Cl.: C01F 7/30, B82Y 30/00

(54) **VERFAHREN ZUR HERSTELLUNG VON NANOKRISTALLINEM ALPHA-AL2O3**
PROCESS FOR PRODUCING NANOCRYSTALLINE ALPHA-Al2O3
PROCEDE DE PRODUCTION D'ALPHA-AL2O3 NANOCRISTALLIN

(30) Priorität: 16.07.2005 DE 102005033393
(43) Veröffentlichungstag der Anmeldung: 09.04.2008
(73) Patentinhaber: Archroma IP GmbH, 4153 Reinach (CH)
(72) Erfinder: RÖSCH, Norbert, 86368 Gersthofen (DE)
(74) Vertreter: Ricker, Mathias
(86) Internationale Anmeldenummer: PCT/EP2006/006854
(87) Internationale Veröffentlichungsnummer: WO 2007/009659

(56) Entgegenhaltungen:
- GB-A- 2 184 715
- OBERBACH, T.; GUENTHER, C.; WERNER, G.; TOMANDL, G.: "Methods for producing corundum at low temperatures" CFI - CERAMIC FORUM INTERNATIONAL, Bd. 74, Nr. 11/12, 1997, Seiten 719-722, XP009072528 Bauverlag GmbH in der Anmeldung erwähnt

## Beschreibung

Die vorliegende Erfindung betrifft ein Verfahren zur Herstellung von nanokristallinem
α-Al₂O₃, auch als Korund bezeichnet, wobei als Ausgangsmaterial Aluminiumchlorohydrat in Form einer Lösung zunächst mit feinstdispersen Kristallisationskeimen, vorzugsweise α-Al₂O₃-Keimen, versetzt und anschließend einer thermischen oder thermophysikalischen Reaktion unterzogen wird.

Ultra-feine Aluminiumoxidpulver werden insbesondere für keramische Anwendungen, zur Matrixverstärkung organischer oder metallischer Schichten, als Füllstoffe, Polierpulver, für die Herstellung von Schleifmitteln, als Additive in Lacken und Laminaten sowie für weitere Spezialanwendungen eingesetzt. Die Herstellung der ultra-feinen Aluminiumoxidpulver erfolgt entweder durch chemische Synthese, mechanische Zerkleinerungsverfahren oder auf thermophysikalischem Weg.

Bei der chemischen Synthese handelt es sich meist um Fällungsreaktionen, (Hydroxidfällung, Hydrolyse metallorganischer Verbindungen) mit anschließender Kalzinierung. Dabei werden häufig Kristallisationskeime zugesetzt um die Umwandlungstemperatur zum α-Aluminiumoxid herabzusetzen. Die so erhaltenen Sole werden umständlich getrocknet und dabei in ein Gel überführt. Die weitere Kalzinierung findet dann bei Temperaturen zwischen 350°C und 650°C statt. Für die Umwandlung zum α-Al₂O₃ muss dann bei Temperaturen um 1000°C geglüht werden. Die Verfahren sind ausführlich in DE 199 22 492 beschrieben.

Ein weiterer Weg nano-Materialien zu erhalten ist das Aerosolverfahren. Dabei werden die gewünschten Moleküle aus chemischen Reaktionen eines Precursorgases oder durch schnelle Abkühlung eines übersättigten Gases erhalten. Die Bildung der Partikel erfolgt entweder durch Kollision oder die ständige im Gleichgewicht befindliche Verdampfung und Kondensation von Molekülclustern. Die neu gebildeten Teilchen wachsen durch weitere Kollision mit Produktmolekülen (Kondensation) und/oder Partikeln (Koagulation). Ist aber die Koagulationsrate größer als jene der Neubildung bzw. des Wachstums, entstehen Agglomerate von kugelförmigen Primärpartikeln.

Flammenreaktoren stellen eine auf diesem Prinzip basierende Herstellungsvariante dar. Nanopartikel werden hier durch die Zersetzung von Precursormolekülen in der Flamme bei 1500°C - 2500°C gebildet. Als Beispiele seien die Oxidationen von TiCl₄; SiCl₄ und Si₂O(CH₃)₆ in Methan/O₂-Flammen erwähnt, die zu TiO₂ und SiO₂ Partikeln führen. Bei Einsatz von AlCl3 konnte bislang nur die entsprechende Tonerde erzeugt werden. Flammenreaktoren werden heute großtechnisch für die Synthese von Submikropartikeln wie Ruß, Pigment-TiO₂, Kieselsäure und Tonerde eingesetzt. Nanoskaliger Korund konnte auf diesem Weg bislang noch nicht hergestellt werden.

Kleine Partikel können auch mit Hilfe von Fliehkraft, Druckluft, Schall, Ultraschall und weiteren Methoden auch aus Tropfen gebildet werden. Die Tropfen werden dann durch direkte Pyrolyse oder durch in-situ Reaktionen mit anderen Gasen in Pulver umgewandelt. Als bekannte Verfahren sind die Sprüh- und Gefriertrocknung zu erwähnen. Bei der Spraypyrolyse werden Precursortropfen durch ein Hochtemperaturfeld (Flamme, Ofen) transportiert, was zu einer raschen Verdampfung der leicht flüchtigen Komponente führt oder die Zersetzungsreaktion zum gewünschten Produkt initiiert. Die gewünschten Partikel werden in Filtern gesammelt. Als Beispiel kann hier die Herstellung von BaTiO₃ aus einer wässrigen Lösung von Bariumacetat und Titanlactat genannt werden.

Durch Mahlung kann ebenfalls versucht werden, Korund zu Zerkleinern und dabei Kristallite im nano-Bereich zu erzeugen. Die besten Mahlergebnisse können mit Rührwerkskugelmühlen in einer Nassmahlung erzielt werden. Dabei müssen Mahlperlen aus einem Material verwendet werden, das eine größere Härte als Korund hat. Diese Methode ist jedoch gekennzeichnet durch einen hohen Verschleiß an Mahlperlen, einer Kontamination des Produkts mit dem Werkstoff der Mahlperlen, einem enormen Zeitaufwand und dem sehr hohen Energieverbrauch.

Ein weiterer Weg zur Herstellung von Korund bei niedriger Temperatur stellt die Umwandlung von Aluminiumchlorohydrat dar. Dieses wird dazu ebenfalls mit Impfkeimen bevorzugt aus Feinstkorund oder Hämatit versetzt. Zur Vermeidung von Kristallwachstum müssen die Proben bei Temperaturen um 700°C bis maximal 900°C kalziniert werden. Die Dauer der Kalzinierung beträgt hierbei mindestens vier Stunden. Nachteil dieser Methode ist deshalb der große Zeitaufwand und die Restmengen an Chlor im Aluminiumoxid. Die Methode wurde ausführlich beschrieben in Ber. DKG 74 (1997) No. 11/12, S.719-722.

Die Nachteile der Verfahren nach dem bekannten Stand der Technik bestehen darin, dass die Ausbeuten pro Zeit aufgrund der langen Kalzinierungszeiten gering sind oder das Produkt im Fall der Mahlung verunreinigt und noch zu grob ist.

Ziel der vorliegenden Erfindung ist es deshalb nano-kristallinen Korund mit einem Verfahren herzustellen, das hohe Ausbeuten in kurzer Zeit bei minimaler Energiezufuhr liefert. Das dabei erzeugte Produkt sollte mit einfachen Mitteln redispergierbar sein und damit stabile nano-Suspensionen liefern können. Entgegen den bisher bekannten Aussagen verschiedener Autoren (Ber. DKG 74 (1997) No. 11/12; DE 199 22 492) kann diese Aufgabe ausgehend von Aluminiumchlorohydrat (Aluminiumhydroxychlorid) gelöst werden.

Überraschend wurde gefunden, dass sich nanokristalliner Korund bereits beim Kalzinieren von Aluminiumchlorohydrat innerhalb weniger Minuten herstellen lässt. Gegenstand der Erfindung ist ein Verfahren zur Herstellung von nanokristallinem α -Al₂O₃, wobei man Aluminiumchlorohydrat mit Keimen versetzt, thermisch behandelt und die so erhaltenen Agglomerate zerkleinert. Die Dauer der thermischen Behandlung beträgt zwischen 0,5 bis 30 Minuten.

Ausgangspunkt für das erfindungsgemäße Verfahren ist Aluminiumchlorohydrat, dem die Formel Al₂(OH)ₓCl_{y} zukommt, wobei x eine Zahl von 2,5 bis 5,5 und y eine Zahl von 3,5 und 0,5 ist und die Summe von x und y stets 6 beträgt. Dieses Aluminiumchlorohydrat wird als wässrige Lösung mit Kristallisationskeimen vermischt, anschließend getrocknet und dann einer thermischen Behandlung (Kalzinierung) unterzogen.

Bevorzugt geht man dabei von 50 %igen wässrigen Lösungen des Aluminiumchlorohydrats aus, wie sie kommerziell verfügbar sind. Eine solche Lösung wird mit Kristallisationskeimen versetzt, die die Bildung der α-Modifikation des Al₂O₃ befördern. Insbesondere bewirken solche Keime eine Herabsetzung der Temperatur für die Bildung der α-Modifikation bei der nachfolgenden thermischen Behandlung. Als Keime kommen in Frage feinstdisperser Korund, Diaspor oder Hämatit. Bevorzugt nimmt man feinstdisperse α-Al₂O₃-Keime mit einer mittleren Teilchengröße von weniger als 0,1 µm. Im Allgemeinen reichen 2 bis 3 Gew.-% an Keimen bezogen auf das entstehende Aluminiumoxid aus.

Diese Suspension aus Aluminiumchlorohydrat und Keimen wird dann bis zum Trocknen eingedampft und einer thermischen Behandlung (Kalzinierung) unterworfen. Diese Kalzinierung erfolgt in hierfür geeigneten Vorrichtungen, beispielsweise in Durchschub-, Kammer-, Rohr-, Drehrohr- oder Mikrowellenöfen oder in einem Wirbelschichtreaktor. Gemäß einer Variante des erfindungsgemäßen Verfahrens kann man auch so vorgehen, dass man die wässrige Suspension aus Aluminiumchlorohydrat und Keimen ohne vorherige Entfernung des Wassers direkt in die Kalzinierungsapparatur einspritzt.

Die Temperatur für die Kalzinierung soll 1100°C nicht übersteigen. Die untere Temperaturgrenze ist abhängig von der gewünschten Ausbeute an nanokristallinem Korund, von gewünschten Restchlorgehalt und dem Gehalt an Keimen. Die Korundbildung setzt bereits bei ca. 500°C ein, um jedoch den Chlorgehalt niedrig und die Ausbeute an nanokristallinem Korund hoch zu halten, wird man jedoch bevorzugt bei 700 bis 1100°C, insbesondere bei 1000 bis 1100°C arbeiten.

Die Zeit für die Kalzinierung liegt im Allgemeinen zwischen 0,5 bis 30 Minuten, vorzugsweise zwischen 0,5 bis 10, insbesondere zwischen 0,5 bis 5 Minuten. Bereits nach dieser kurzen Zeit kann unter den oben angegebenen Bedingungen für die bevorzugten Temperaturen eine ausreichende Ausbeute an nanokristallinem Korund erreicht werden.

Bei der Kalzinierung fallen Agglomerate von nanokristallinem Korund in Form von nahezu kugelförmigen Primärkristalliten an, wobei unter dem Begriff "nanokristallin" eine Teilchengröße von im Allgemeinen 20 bis 100 nm verstanden wird. Zur Gewinnung dieser Primärpartikel werden die Agglomerate durch Nass- oder Trockenmahlung, vorzugsweise durch Nassmahlung in Wasser, zerkleinert, beispielsweise in einer Attritormühle, Luftstrahlmühle oder Rührwerksmühle. Diese Agglomerate werden in einem anschließenden Schritt desagglomeriert, wobei sämtliche in der Keramik bekannten Desagglomerationsverfahren eingesetzt werden können, da es sich im vorliegenden Fall um relativ leicht zerstörbare Agglomerate handelt. Vorzugsweise wird zur Desagglomeration eine Nass- oder Trockenmahlung durchgeführt, wobei die Nassmahlung vorzugsweise in einem Attritor erfolgt, während die Trockenmahlung in einer Luftstrahlmühle durchgeführt wird. Da die bei der Mahlung als Produkt angestrebten Nanopartikel äußerst reaktiv sind, werden vorzugsweise vor oder während der Mahlung Additive zugesetzt, die eine erneute Agglomeration der Nanoteilchen verhindern. Besonders günstig ist es daher, die anschließende Desagglomeration in Form einer Nassmahlung durchzuführen. Zur Nassmahlung eignen sich Vibrationsmühlen, Attritoren, Kugelmühlen, Rührwerkskugelmühlen oder ähnliche Vorrichtungen. Als besonders vorteilhaft hat sich dabei der Einsatz von Rührwerkskugelmühlen gezeigt. Die Mahldauer hängt von der Festigkeit der Agglomerate selber ab und liegt beim erfindungsgemäßen Verfahren üblicherweise zwischen 2 und 6 Stunden. Die Nassvermahlung oder Desagglomeration wird vorteilhaft im wässrigen Medium durchgeführt, es können jedoch auch alkoholische oder andere organische Lösungsmittel eingesetzt werden. So erhält man beispielsweise nach einer zweistündigen Mahlung in Wasser eine wässrige Suspension von nanokristallinem Korund mit einem d50-Wert von kleiner als 100 nm. Vorteilhaft ist es auch, während der Nassmahlung zusätzlich Additive einzusetzen, die sich an der Oberfläche der Teilchen anlagern und eine Agglomeration auch bei einem anschließenden Trocknungsschritt verhindern. Geeignete Materialien dafür sind Polyvinylalkohole, Stearate, Wachsemulsionen, Acrylate oder Polyethylenglykole. Die nach der Nassvermahlung erhaltene Suspension kann durch Sprühtrocknung, Wirbelschichttrocknung oder Granulierung in ein definiertes Pulver überführt werden.

Das erfindungsgemäße Verfahren erlaubt es, ausgehend von einem kommerziell verfügbaren Rohstoff, nanokristallinen Korund in einer sehr viel kürzeren Zeit herzustellen im Vergleich zu den Verfahren gemäß dem Stand der Technik.

Der so hergestellte nanokristalline Korund kann in einer Vielzahl von Anwendungsbereichen eingesetzt werden, beispielsweise für die Herstellung von Keramik oder von Schleifmitteln.

### Beispiele

### Beispiel 1:

Eine 50 %ig wässrige Lösung von Aluminiumchlorohydrat wurde mit 2 % Kristallisationskeimen einer Suspension aus Feinstkorund versetzt. Nachdem die Lösung durch Rühren homogenisiert wurde, erfolgt die Trocknung in einem Rotationsverdampfer. Das feste Aluminiumchlorohydrat wurde in einer Reibschale zerkleinert, wobei ein grobes Pulver entstand.
Das Pulver wurde in einem Muffelofen bei 1050°C kalziniert. Die Kontaktzeit in der heißen Zone betrug maximal 5 min. Es wurde ein weißes Pulver erhalten, dessen Kornverteilung dem Aufgabegut entsprach.

Eine Röntgenstrukturanalyse zeigt, dass es sich-um phasenreines α-Aluminiumoxid handelt.

Die Bilder der durchgeführten REM-Aufnahme (Rasterelektronenmikroskop) zeigten Kristallite im Bereich 10 - 100 nm. Der Restchlorgehalt betrug nur wenige ppm.

### Beispiel 2:

Das feste Aluminiumchlorohydrat mit 2 % Kristallisationskeimen aus Beispiel 1 wurde einem Labor-Drehrohrofen zugeführt. Auch in diesem Beispiel bildet sich phasenreines α-Aluminiumoxid bei einer Kontaktzeit von maximal 5 Minuten und einer Temperatur von 1050° C.

Die übrigen Eigenschaften des erhaltenen Pulvers sind mit dem Produkt aus Beispiel 1 identisch.

### Beispiel 3:

150 g Korundpulver aus Beispiel 1 wurde in 150 g Wasser suspendiert. Die Suspension wurde einer vertikalen Rührwerkskugelmühle der Fa. Netzsch (Typ PE 075) zugeführt. Die eingesetzten Mahlperlen bestanden aus Zirkoniumoxid (stabilisiert mit Yttrium) und wiesen eine Größe von 0,3 - 0,5 mm auf.

Die Kornverteilung des Aufgabeguts lag zwischen 20 - 100 µm. Nach jeweils einer, zwei, drei und vier Stunden wurde die Mühle angehalten und eine Probe entnommen. Außerdem erfolgte zu diesen Zeiten eine Überprüfung des pH-Werts. Der bei fortschreitender Desagglomeration ansteigende pH-Wert wurde durch Zugabe von verdünnter Salzsäure auf pH 5 gehalten. Die stündlich entnommenen Proben wurden mit einem Horiba-Partikelsizer charakterisiert.

Es zeigte sich, dass-die Primärkristallite nach 4 h nur noch schwach agglomeriert waren. Die groben Primärpartikel (20 - 100 µm) waren schon nach 1 h fast vollständig zerstört, sodass nach dieser Zeit ein d50 ∼ 270 nm festzustellen war. Der d50 nach 4 h war < 108 nm.

### Beispiel 4:

In diesem Beispiel wird für die Stabilisierung der nano-Partikel anstelle von Salzsäure ein Acrylatpolymer (Dispex^{®} A40, Ciba) verwendet.

150 g Korundpulver aus Beispiel 1 wurde in 150 g Wasser suspendiert. Außerdem wurde 1 % an Dispex A40, bezogen auf die Korundmasse, der Suspension beigemischt. Die Suspension wurde einer vertikalen Rührwerkskugelmühle der Fa. Netzsch (Typ PE 075) zugeführt. Die eingesetzten Mahlperlen bestanden aus Zirkoniumoxid (stabilisiert mit Yttrium) und wiesen eine Größe von 0,3 - 0,5 mm auf.

Die Kornverteilung des Aufgabeguts lag zwischen 20 - 100 µm. Nach jeweils einer, zwei, drei und vier Stunden wurde die Mühle angehalten und je nach Viskosität der Suspension weiteres Dispex A40 zugegeben, sodass der Endgehalt ca. 4 % betrug. Die Suspension hatte nach 4 h einen d50 von 148 nm.

### Beispiel 5:

Die Suspension aus Beispiel 3 wurde mit der Wachsemulsion Licowax^{®} KST (Clariant) unter Rühren versetzt, wobei der Wachsanteil bezogen auf den Korund ca. 3 % betrug. Die so erhaltene Dispersion wurde in einem Labortrockner der Fa. Büchi (Mini Spray Dryer B-290) sprühgetrocknet. Die Lufteintrittstemperatur betrug 180°C, die Temperatur der Austrittsluft lag bei 100°C. Es wurde ein lockeres Sprühpulver erhalten, das für formgebende Verarbeitungen im Bereich Keramik und Schleifmittel eingesetzt werden kann.

## Patentansprüche

1. Verfahren zur Herstellung von nanokristallinem Al₂O₃, **dadurch gekennzeichnet, dass** man Aluminiumchlorohydrat mit Keimen versetzt, die Suspension aus Aluminiumchlorohydrat plus Kristallisationskeime zunächst trocknet und das getrocknete Produkt anschließend kalziniert, also innerhalb von 0,5 bis 30 Minuten thermisch behandelt und die dabei erhaltenen Agglomerate zerkleinert, oder
dass man die wässrige Suspension aus Aluminiumchlorohydrat und Keimen ohne vorherige Entfernung des Wassers direkt in die Kalzinierungsapparatur einspritzt.

2. Verfahren nach Anspruch 1, **dadurch gekennzeichnet, dass** als Aluminiumchlorohydrat eine Verbindung mit der chemischen Formel Al₂(OH)ₓCl_{y} eingesetzt wird, wobei x eine Zahl zwischen 2,5 und 5,5 und y eine Zahl zwischen 3,5 und 0,5 ist, wobei die Summe x+y stets 6 beträgt.

3. Verfahren nach Anspruch 1, **dadurch gekennzeichnet, dass** als Kristallisationskeime feinstdisperser α-Al₂O₃, Hämatit oder Diaspor verwendet wird.

4. Verfahren nach Anspruch 1 , **dadurch gekennzeichnet, dass** die eingesetzten feinstdispersen α-Al₂O₃₋Keime eine mittlere Teilchengröße von weniger als 0, 1 µm aufweisen.

5. Verfahren nach Anspruch 1, **dadurch gekennzeichnet, dass** man die Kalzinierung in einem Durchschub-, Kammer-, Rohr-, Drehrohr- oder Mikrowellenofen oder in einem Wirbelschichtreaktor durchführt.

6. Verfahren nach Anspruch 1, **dadurch gekennzeichnet, dass** man die Kalzinierung bei Temperaturen unterhalb 1100°C durchführt.

7. Verfahren nach Anspruch 1, **dadurch gekennzeichnet, dass** man die Kalzinierung bei 700 bis 1100°C durchführt.

8. Verfahren nach Anspruch 1, **dadurch gekennzeichnet, dass** man die thermische Behandlung innerhalb von 0,5 bis 10, insbesondere 2 bis 5 Minuten durchführt.

9. Verfahren gemäß Anspruch 1, **dadurch gekennzeichnet, dass** man die bei der thermischen Behandlung gebildeten Agglomerate in einem anschließenden Schritt durch eine Nass- oder Trockenmahlung zerkleinert werden.

10. Verfahren gemäß Anspruch 1, **dadurch gekennzeichnet, dass** die bei der thermischen Behandlung gebildeten Agglomerate in einem anschließenden Schritt durch eine Nassvermahlung zerkleinert werden, wobei bei oder nach der Nassmahlung der entstehenden Suspension Acrylate, Polyvinylalkohole, Polyethylenglykole, Stearate oder Wachsemulsionen zugesetzt werden.

11. Verfahren gemäß Anspruch 1, **dadurch gekennzeichnet, dass** die bei der thermischen Behandlung gebildeten Agglomerate in einem anschließenden Schritt durch eine Nassvermahlung zerkleinert und die erhaltene Suspension einer Sprühtrocknung unterzogen wird

## Claims

1. Method for production of nanocrystalline Al₂O₃ **characterized in that** seeds are added to aluminum chlorohydrate, at first the suspension of aluminum chlorohydrate plus crystallization seeds is dried and subsequently the dried product is calcinated, so thermal treatment takes place within 0.5 to 30 minutes and the thus obtained agglomerates are grinded, or
that the aqueous suspension of aluminum chlorohydrate and seeds is directly injected into the calcination apparatus without previous removal of water.

2. Method according to claim 1 **characterized in that** a compound of the chemical formula Al₂(OH)ₓCl_{y} is used as aluminum chlorohydrate, wherein x is a number between 2.5 and 5.5 and y is a number between 3.5 and 0.5, wherein the sum of x+y is always 6.

3. Method according to claim 1 **characterized in that** finely dispersed α-Al₂O₃, hematite or diaspore are used as crystallization seeds.

4. Method according to claim 1 **characterized in that** the used finely dispersed α-α-Al₂O₃ seeds have an average particle size of less than 0.1 µm.

5. Method according to claim 1 **characterized in that** the calcination is performed in a push-through furnace, a chamber furnace, a tube furnace, a rotary furnace or a microwave furnace or in a fluidized bed reactor.

6. Method according to claim 1 **characterized in that** the calcination is performed at temperatures of less than 1100 °C.

7. Method according to claim 1 **characterized in that** the calcination is performed at 700 to 1100 °C.

8. Method according to claim 1 **characterized in that** the thermal treatment is performed within 0.5 to 10 minutes, preferably within 2 to 5 minutes.

9. Method according to claim 1 **characterized in that** the agglomerates formed in the thermal treatment are grinded by wet or dry milling in a subsequently following step.

10. Method according to claim 1 **characterized in that** the agglomerates formed in the thermal treatment are grinded by wet milling in a subsequently following step, wherein acrylates, polyvinyl alcohols, polyethylene glycols, stearates or wax emulsions are added during or after wet milling to the formed suspension.

11. Method according to claim 1 **characterized in that** the agglomerates formed in the thermal treatment are grinded by wet milling in a subsequently following step and the thus obtained suspension is subjected to spray drying.

## Revendications

1. Procédé de production d'Al₂O₃ nanocristallin, **caractérisé en ce que** l'on mélange du chlorhydrate d'aluminium avec des germes, que l'on sèche d'abord la suspension constituée de chlorhydrate d'aluminium plus les germes de cristallisation, et que l'on calcine ensuite le produit séché, que l' on traite ensuite thermiquement en 0,5 à 30 minutes, et que l'on broie ensuite les agglomérats obtenus, ou
**que** l'on injecte la suspension aqueuse constituée de chlorhydrate d'aluminium et de germes, sans éliminer l'eau au préalable, directement dans l'appareil de calcination.

2. Procédé selon la revendication 1, **caractérisé en ce que** l'on met en oeuvre comme chlorhydrate d'aluminium un composé de formule chimique Al₂(OH)ₓCly, où x est un nombre compris entre 2,5 et 5,5 et y est un nombre entre 3,5 et 0,5, la somme x+y étant toujours égale à 6.

3. Procédé selon la revendication 1, **caractérisé en ce que** l' on utilise de l'α-Al₂O₃ finement dispersé, de l'hématite ou du diaspore comme germes de cristallisation.

4. Procédé selon la revendication 1, **caractérisé en ce que** les germes d'α-Al₂O₃ finement dispersés mis en oeuvre présentent une taille de particules moyenne inférieure à 0,1 µm.

5. Procédé selon la revendication 1, **caractérisé en ce que** l'on réalise la calcination dans un four à chargement progressif, à chambres, tubulaire, à tube rotatif ou à micro-ondes ou dans un réacteur en lit fluidisé.

6. Procédé selon la revendication 1, **caractérisé en ce que** l'on réalise la calcination à des températures inférieures à 1100 °C.

7. Procédé selon la revendication 1, **caractérisé en ce que** l'on réalise la calcination de 700 à 1100 °C.

8. Procédé selon la revendication 1, **caractérisé en ce que** l'on réalise le traitement thermique en 0,5 à 10, notamment en 2 à 5 minutes.

9. Procédé selon la revendication 1, **caractérisé en ce que** l'on broie les agglomérats formés lors du traitement thermique au cours d'une étape consécutive par le biais d'un broyage par voie humide ou à sec.

10. Procédé selon la revendication 1, **caractérisé en ce que** l'on broie les agglomérats formés lors du traitement thermique au cours d'une étape consécutive par le biais d'un broyage par voie humide, où, pendant ou après le broyage par voie humide, on ajoute des acrylates, des alcools polyvinyliques, des polyéthylène glycols, des stéarates ou des émulsions de cire à la suspension obtenue.

11. Procédé selon la revendication 1, **caractérisé en ce que** l'on broie les agglomérats formés lors du traitement thermique au cours d'une étape consécutive par le biais d'un broyage par voie humide et que l'on soumet la suspension obtenue à un séchage par pulvérisation.
